# EUROPEAN PATENT APPLICATION

(11) **EP 0 840 199 A2**
(43) Date of publication of application: **06.05.1998**
(21) Application number: 97305194.9
(22) Date of filing: 14.07.1997
(51) Int. Cl.: G06F 3/033

(54) **Screen-based interface for interactive desktop system**

(30) Priority: 12.07.1996 GB 9614694
(71) Applicant: RANK XEROX LIMITED, Marlow, Buckinghamshire SL7 1YL (GB)
(72) Inventor: Taylor, Michael J., Dr., Cambridge, Cambs (GB); Aldhous, Anthony C., Dr., Bedford, Bedfordshire (GB)
(74) Representative: Reynolds, Julian David

(57) **Abstract**

An interactive desktop system comprising a work surface, a CRT monitor for displaying images in a display area, a video camera, for capturing images present on the work surface, and a processor, coupled to the monitor and the camera, the processor including causing the display in a portion of said display area of said images present within the field of view of the camera.

## Description

This invention relates to a document processing system in which a user manipulates documents interactively via using a camera positioned above a desk, and more particularly to a screen-based interface to selection and copying of documents using a video camera.

Flat-bed scanners are currently well known in the art and are useful for certain purposes. However, flat-bed scanning is slow, requiring a pre-scan before the user can select an area. Also, flatbed scanners are physically quite large and as a consequence are often situated away from the desk, or place of reading. To scan a document on a flat-bed scanner, a document must usually be moved from the reading-space and placed face-down on the platen. This is inconvenient, especially for large documents such as books.

It is known from EP-A-495 622 to use a camera-projector arrangement positioned above a desk, in order to enable a user to select functions to be performed by selecting items located within the field of view of the camera. A video camera or scanner is used to capture images of documents on a desk, and feedback information is displayed by means of a projection display. The functions include calculating and translating operations carried out on data (e.g., in a paper document) located on the desk.

EP-A-622,722 discloses a system for generating new documents from originals containing text and/or images employing e.g. a camera-projector system focused on a work surface, in conjunction with a copier or printer. In use, the camera captures various manual operations carried out by the user, e.g. by pointing with fingers and tapping on the surface on the text or images in an original paper document on the surface and representing manipulations of the text or images. Feedback to the user is provided by projection of an image onto the surface or onto the original, or using some other visual display.

The systems described in EP-A-495 622 and EP-A-622,722 provide an expensive solution since they requires a projected interface, and is inconvenient when transfer to electronic tools such as word processors is desired because such tools require a clear area on the desktop where the window for the application can be projected. What is needed is a scanning process that uses an over-the-desk video source that allows copying at the place-of-work, and a more cost-effective and computer orientated feedback mechanism.

In addition, in the systems of EP-A-495 622 and EP-A-622,722, camera and display must be kept in registration, and this involves calibration whenever the camera's field of view changes with respect to the display.

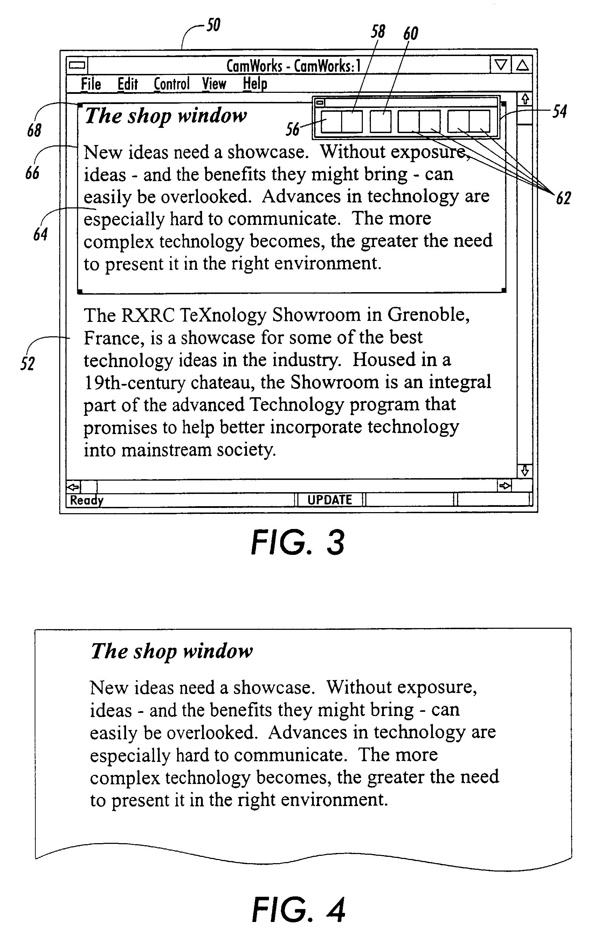

EP-A-622,722 discloses a calibration system which projects a cross (+) at four successive points; and calculates the mapping from the four points the using a set of equations (see Fig. 4). With four point pairs, the set of simultaneous linear equations are solved by Gaussian Elimination. Then, a fifth cross (+) is projected and its location is checked to make sure it is close enough to the position produced by the mapping. While this process deals with the keystoning and rotation effects caused by lack of alignment of the camera to the display, and the result is accurate to within one or two display pixels, it requires the user manually to specify the rough position of the camera's field of view, and is thus inappropriate for situations where the field of view is constantly or frequently changing.

It would be desirable to provide a system for which such calibration was unnecessary.

The present invention provides a method carried out in an image processing system in which images of documents are captured by an image capture device, and displayed by a display device in a display area, the image capture device and the display device being coupled to processor means, comprising: (a) displaying successive images captured by the image capture device in a portion of said display area, each image being defined by greyscale data, (b) receiving a first user input defining the start of a selection and a first position within the displayed image, (c) in response to the first user input, freezing the displayed image, (d) receiving at least one further user input, including a final user input defining the end of a selection, and (e) extracting from the frozen displayed image a selected image having extremities defined by said first and final user inputs.

The present invention further provides an interactive desktop system comprising a work surface, a display device for displaying images in a display area, an image capture device for capturing images present on the work surface, a memory device and processor means, coupled to the display device, said image capture device, and said memory device, the system including: means for displaying successive images captured by the image capture device in a portion of said display area, each image being defined by greyscale data, means for receiving a first user input defining the start of a selection and a first position within the displayed image, means in response to the first user input, for freezing the displayed image, means for receiving at least one further user input, including a final user input defining the end of a selection, and means for extracting from the frozen displayed image a selected image having extremities defined by said first and final user inputs.

Preferably, the display device comprises a desk-mounted VDU, such as a CRT monitor. Alternatively, the display device may comprise a flat panel display, such as a LCD display. In either case, the display area of the display device includes a window in which the images within the field of view of the camera are displayed. Preferably, the capturing means comprises a video camera.

An advantage is that the invention enables documents to be scanned directly from the desktop with a video camera, thus preserving the advantages of convenience offered by the systems in the above-mentioned EP-A-495 622 and EP-A-622,722 over traditional flat-bed scanning. However, unlike the those systems, it provides user feedback defining the selected copy region using a conventional display instead of a projector. This means that the scanning operation can still take place at the place of reading, without the need to turn things upside-down, but it avoids the use of an expensive projector. This also allows a more natural interface with existing electronic documents (word-processors, spread-sheets etc.) than is possible with the systems in the above-mentioned EP-A-495 622 and EP-A-622,722 because the interface is on the display of a computer. This avoids the problem of having to find a clear part of the normal desk-top onto which the application window may be projected.

Embodiments of the invention will now be described, by way of example, with reference to the accompanying drawings, in which:
Figure 1 shows a view of the overall system according to one embodiment of the invention;
Figure 2 is a schematic block diagram of the computer used in the system of Fig. 1;
Figure 3 illustrates a display window employed in accordance with the invention;
Figure 4 shows a portion of text selected from the display window of Fig. 3 and which has been printed; and
Figures 5(a) to 5(c) illustrate the processing steps in implementing the text/image selection interface according to an embodiment of the invention.

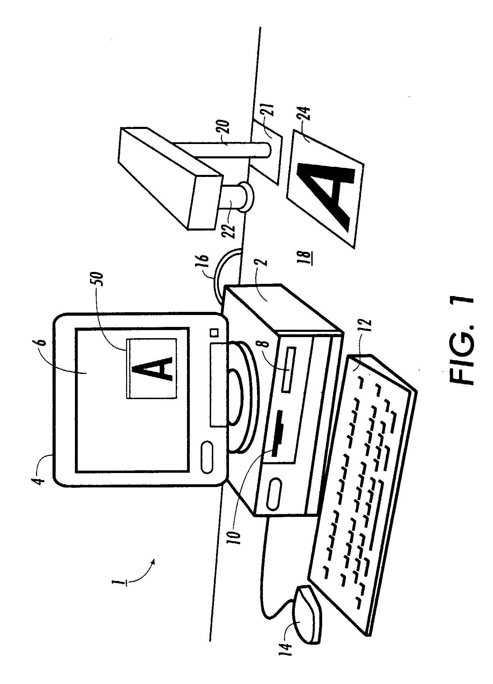

The general system configuration according to the invention, employing a camera positioned above and focused on a work surface, is illustrated in Fig. 1. It will be appreciated by persons skilled in the art that the invention may be implemented using a PC running MS-DOS®/Windows™ and equipped with a frame grabber board and appropriate interfacing circuitry (see, for example, Jähne B., *Digital Image Processing*, Appendix B, Springer-Verlag, Heidelberg, 1991).

Alternatively, the hardware configuration described in detail in published European application EP-A-622,722, may be employed except that the video projector is omitted. The camera is connected to image processing hardware described in detail in that application.

In implementing the present invention, image processing techniques described in EP-A-622,722 may be used, modified, as appropriate and/or as described below.

Returning to Fig. 1, the well known computer there depicted comprises a housing 2, a CRT monitor 4 having a display screen 6, a hard disk drive 8, a floppy disk drive 10, keyboard 12, and mouse 14. The computer is coupled to a network cable 16, which in conjunction with a conventional internal driver card (not shown) and appropriate software (such as Netware, available from Novell Corp.) enable the computer to form part of a local (LAN) or wide area network (WAN), as is well known in the art.

To the surface 18 of the desk is fixed a rigid frame 20 by means of a suitable bracket 21 and or clamping arrangement (not shown). Within the upper section of the frame 20 is mounted a video camera 22, as disclosed in EP-A-622,722. Alternatively, the camera 22 may be mounted on a fixture such as a bookshelf, or some other rigid arrangement, above the desk surface 18.

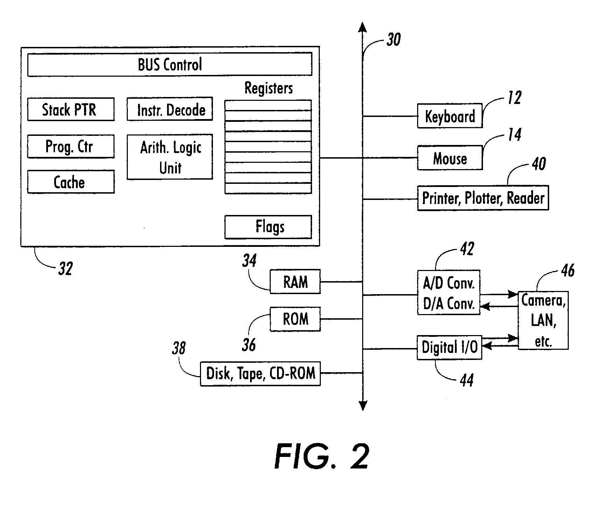

The hardware of the computer system 1 is schematically shown in Fig. 2. The configuration is well known to persons skilled in the art and is described in detail in, for example, *The Art of Electronics*, 2nd Edn, Ch. 10, P. Horowitz and W. Hill, Cambridge University Press, 1989. Stated briefly, the system comprises, connected to common bus 30, a central processing unit 32, memory devices including random access memory (RAM) 34, read only memory (ROM) 36 and disk, tape or CD-ROM drives 38, keyboard 12, mouse 14, printing, plotting or scanning devices 40, and A/D, D/A devices 42 and digital input/output devices 44 providing interfacing to external devices 46 such as camera 22 and the rest of the LAN (not shown).

In use, the video camera 22 captures images of the desk-surface 18 and these images are displayed in real-time in a window 50 on the computer display 6.

Figure 3 illustrates in more detail a display window 50 employed in accordance with the invention. The display window 50 suitably has the conventional attributes (e.g. pull-down menus, scroll buttons, move and resize functions) of a window in the Microsoft® Windows environment, which are well known to persons skilled in the art (see *Microsoft Windows* & *MS-DO*S® *6.2 User's Guide*, Microsoft Corporation, 1993).

The content of the document 24 which is within the field of view of camera 22 is displayed within the display area 52 of display window 50.

The display window 50 has an additional associated tool bar 54 which includes save-to-disk button 56, Print button 58 and Copy button 60. The tool bar 54 also includes mode setting buttons 62: these enable the user to select the image capture mode of the system ― scan (bitmap) image capture, photograph capture, capture with optical character recognition (OCR), etc. ― which are discussed in further detail below.

The user can select a region of the live image stream for copying with the use of the mouse 14. The region usually contains a document image such as a word, paragraph or diagram, but it may also be of a 3D object that cannot be scanned by traditional means. Real-time image segmentation techniques can be used to identify the text or graphic objects selected, and these can be highlighted to aid selection. Image segmentation techniques are known in the art and are discussed, for example, in GB patent application no. 9521071.2 and EP-A-521,662.

The resolution of the image, in dots per inch, is not fixed but rather depends upon the size of the field of view, which is variable. Therefore this size must be determined by placing a pre-defined printed pattern (e.g. two dots with known separation) under the camera 22, and analysing the captured image.

To scan information from the document 24, the user selects a portion of the displayed image using the mouse 14. In the instance shown in Fig. 4, the selected image is a paragraph of text 64. The paragraph 64 is selected by the user creating a bounding box 66 (which is displayed superimposed on the live video image) around it using mouse 14. The user moves the mouse cursor (not shown) to an initial position at one corner (e.g. top left) of the intended bounding box 66. While holding down the left mouse button, the user drags the mouse cursor to the diagonally opposite (e.g. bottom right) corner of the intended bounding box 66, and then releases the mouse button. (During the movement, the box defined by the original mouse position and the current mouse position is continuously displayed as feedback to the user.) A handle 68 is provided at each corner of the box 66 to enable subsequent fine adjustments of the dimensions of the bounding box by the user, via mouse 14.

The user is then able to copy the selected matter within the bounding box 66 by selecting Copy button 60 in the tool bar 54 with the mouse cursor: the selected paragraph 64 is scanned into the computer's clipboard (see the above-mentioned GB patent application no. 9521071.2). The paragraph 64 can then be pasted directly into any document (e.g. a document in a word processor application, or a MS® PowerPoint slide).

Alternatively, using the mode setting buttons 62, character recognition mode can be selected via the mouse. Here, OCR software (e.g. Xerox' TextBridge) is employed to convert the scanned image to (ASCII) text for further use/manipulation.

If the image to be copied is alternatively of a photographic type, the user may select "photographic mode" by means of the appropriate mode selection button 62 in the tool bar 54: in this case, a grayscale image of the selected matter is obtained and entered in the clipboard.

Once captured, the image can be saved in a file on disk, through the user selecting button 56 in the tool bar 54. The user can also print out the image by selecting button 58 in the tool bar 54. Figure 4 shows the result of printing out the selected paragraph 64 at a resolution of 200 dots per inch (8 dots/mm).

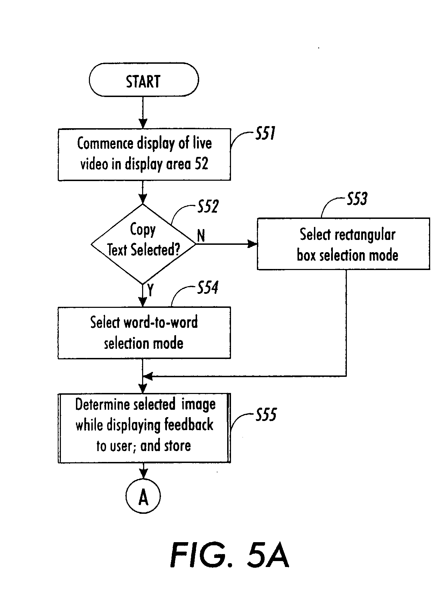

Figures 5(a) to 5(c) illustrate the processing steps in implementing the text/image selection interface according to an embodiment of the invention.

As shown in Fig. 5(a), the display of images captured by camera 22 in the display area 52 of the window 50 is commenced (step s51): this involves displaying live video images of documents or objects within the field of view of camera 22 as they are moved around within that field of view by the user before an appropriate positioning is obtained.

A determination is made at step s52 as to whether copying of text has been selected by the user (by pressing an appropriate one of buttons 56-62 in the toolbar 54). If not, and as a default, the mode involving selection by means of a rectangular box is selected (step s53). On the other hand, if "Copy Text" has been selected by the user, the system's word-to-word selection mode is selected (step s54).

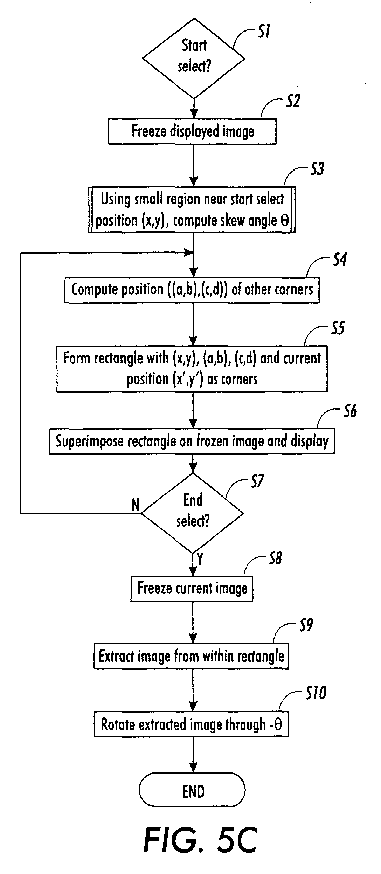

Next, at step s55, the image (which may include text matter) selected by the user is determined, while continuously displayed feedback to the user about what matter within the displayed images is being selected. The method used for determining the selected images proceeds in a manner dependent on whether rectangular box selection mode or word-to-word selection mode was selected during steps s52-s54. In the case of rectangular box selection mode the determination and extraction of the selected image proceeds as shown in Fig. 5(c): this is described in more detail in British patent application 97 110 22.5 (Agent's ref: R/97007/JDR), filed 28 May 1997. In the case of word-to-word selection mode the determination and extraction of the selected image proceeds as described also in detail in British patent application 97 110 22.5 (Agent's ref: R/97007/JDR). For conciseness, a detailed description of these techniques has been omitted from the present disclosure. In each case, it will be observed that the displayed image is frozen upon the user's first selection input (i.e. left mouse button pressed with cursor within the display area 52 and at the position which will form the top left corner of the selection rectangle, or at the start of the first word to be selected. It will be appreciated that the displayed image may alternatively be frozen upon the "Copy Text" button being selected. Alternatively, if the "Copy Text" button is not selected, the default selection method (e.g. rectangular box) may be used, and the displayed image may be frozen upon the left mouse button being pressed with cursor within the display area 52 and at the position which will form the top left corner of the selection rectangle.

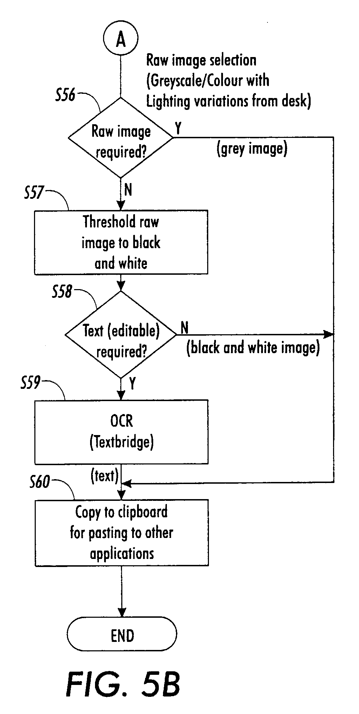

Referring to Fig. 5(b), once the raw image selected by the user has been obtained, a test is made (step s56) to determine whether this (greyscale) image is required: this may be apparent from the user's response, input by keyboard or mouse, in response to an earlier prompt by the system, or through the selection by the user of a button from among the buttons 56-62 on the toolbar 54 corresponding to greyscale image copying function (e.g., when the user wishes to copy a photograph from a magazine).

If it is determined at step s56 that the raw (greyscale) image was not required, the selected image is converted (step s57) from greyscale (multibit per pixel) to a black and white (binary, or one bit per pixel) image, for example using techniques described in British patent application 97 110 24.1 (agent's ref: R/97008/JDR), filed 28 May 1997. As mentioned therein, such conversion may include resolution enhancement.

Next, at step s58, a test is made (step s56) to determine whether the text contained in the thresholded form of the selected image is required in editable form: this may be apparent from the user's response, input by keyboard or mouse, in response to an earlier prompt by the system, or through the selection by the user of a button from among the buttons 56-62 on the toolbar 54 corresponding to an OCR function (e.g., when the user wishes to copy a passage of text and thereafter edit it).

If it is determined at step s58 that editable text is required, an OCR operation, for example using TextBridge software available from Xerox Corp., is performed at step s59.

As can be seen in Fig. 5(b), if it is determined at step s56 that the raw selected image is required, or if it is determined at step s58 that the editable form of text is not required, or once the OCR operation of step s59 has been performed, the relevant data is stored in the systems clipboard (copy/cut and paste buffer), as is well known in the art and described in European patent application 96 307 458.8 (agent's ref: R/95003/JDR).

It will be appreciated that a system has been provided which has numerous advantages compared with those described in the abovementioned references: feedback is provided through an on-screen video window, so the projector is omitted which makes the system cheaper and less cumbersome; calibration between desk and camera is not required which gives more accurate selection; there is no need to find a clear area of the desk for the projection of destination application programmes; and the system provides convenient integration with PC-based tools, e.g. word processors.

## Claims

1. A method carried out in an image processing system in which images of documents are captured by an image capture device, and displayed by a display device in a display area, the image capture device and the display device being coupled to processor means, comprising:
(a) displaying successive images captured by the image capture device in a portion of said display area, each image being defined by greyscale data,
(b) receiving a first user input defining the start of a selection and a first position within the displayed image,
(c) in response to the first user input, freezing the displayed image,
(d) receiving at least one further user input, including a final user input defining the end of a selection, and
(e) extracting from the frozen displayed image a selected image having extremities defined by said first and final user inputs.

2. The method of claim 1, further comprising, for the or each further user input,
(d') determining the position, shape and dimensions of a selection element in dependence upon at least said first position, the selection element having extremities coincident with those of the selected image, and
(d'') displaying the selection element superimposed on said frozen displayed image.

3. The method claim 2, further including the step of
(f) receiving a second user input indicating that the selected image is to be copied, and in response thereto, scanning the selected image into a predetermined portion of the memory device.

4. A programmable printing apparatus when suitably programmed for carrying out the method of any of the preceding claims.

5. An interactive desktop system comprising a work surface, a display device for displaying images in a display area, an image capture device for capturing images present on the work surface, a memory device and processor means, coupled to the display device, said image capture device, and said memory device, the system including
means for displaying successive images captured by the image capture device in a portion of said display area, each image being defined by greyscale data,
means for receiving a first user input defining the start of a selection and a first position within the displayed image,
means in response to the first user input, for freezing the displayed image,
means for receiving at least one further user input, including a final user input defining the end of a selection, and
means for extracting from the frozen displayed image a selected image having extremities defined by said first and final user inputs.

6. The system according to claim 5, further including means operable, for the or each further user input,
(d') for determining the position, shape and dimensions of a selection element in dependence upon at least said first position, the selection element having extremities coincident with those of the selected image, and
(d'') for displaying the selection element superimposed on said frozen displayed image.

7. The system according to claim 5 or 6, wherein said processor means includes means, responsive to a second user input, indicating that the selected image is to be copied, for scanning the selected image into a predetermined portion of the memory device.

8. The system or method according to any of the preceding claims, wherein said portion of the display area comprises a window in which the images within the field of view of the image capture device are displayed.

9. The system or method according to any of the preceding claims, wherein the display device comprises (A) a desk-mounted VDU, such as a CRT monitor, or (B) a flat panel display, such as a LCD display.

10. The system or method according to any of the preceding claims, wherein the image capture device comprises a video camera.
